# EUROPÄISCHE PATENTSCHRIFT

(11) **EP 1 503 539 B1**
(45) Veröffentlichungstag und Bekanntmachung des Hinweises auf die Patenterteilung: **18.07.2007**
(21) Anmeldenummer: 03090244.9
(22) Anmeldetag: 31.07.2003
(51) Int. Cl.: H04L 12/14, H04Q 7/38

(54) **Verfahren zum Ermitteln eines Abrechnungstarifs zum Abrechnen einer Datenübertragung**
Method for calculating a tariff for the billing of a data transmission
Méthode pour le calcul d'un tarif pour la facturation d'une transmission de données

(43) Veröffentlichungstag der Anmeldung: 02.02.2005
(73) Patentinhaber: SIEMENS AKTIENGESELLSCHAFT, 80333 München (DE)
(72) Erfinder: Kissner, Martin, 16766 Kremmen (DE); Koch, Friedrich, 81929 München (DE); Scheibe, Hagen, 85521 Ottobrunn (DE); Schendel, Jens, 13349 Berlin (DE); Wölkner, Christian, 36404 Oechsen (DE)

(56) Entgegenhaltungen:
- EP-A- 1 223 737
- US-B1- 6 490 450
- MOULY M ET AL: "THE BASIC PROCEDURES" GSM SYSTEM FOR MOBILE COMMUNICATIONS, LASSAY-LES-CHATEAUX, EUROPE MEDIA, FR, 1993, Seiten 466-477, XP002047768

## Beschreibung

Die Erfindung betrifft ein Verfahren zum Ermitteln eines Abrechnungstarifs zum Abrechnen einer Datenübertragung, wobei sich ein an der Datenübertragung beteiligtes mobiles Kommunikationsendgerät, welches Zugriffsrechte für ein Daten-Mobilfunknetz besitzt, in einem Besucher-Mobilfunknetz befindet.

In Telekommunikationsnetzen werden Telekommunikationsteilnehmern eine Vielzahl von Diensten angeboten. Bei solchen Diensten finden regelmäßig Datenübertragungen statt zwischen einem Dienstanbieter (beispielsweise einem Dienst-Server) und einem Dienstnutzer (beispielsweise einem Kommunikationsendgerät eines Telekommunikationsteilnehmers). Mit Hilfe derartiger Datenübertragungen können beispielsweise Filmdaten, Audiodaten, Nachrichtendaten, Börsenkurs-Daten oder ähnliche geldwerte Informationen von einem dienstanbietenden Dienstrechner zu dem dienstnutzenden Kommunikationsendgerät übertragen werden. In modernen Kommunikationsnetzen (die beispielsweise nach GPRS- oder UMTS-Vorgaben aufgebaut sind) werden die Daten in Form von Datenpaketen zwischen dem Dienstrechner und dem Kommunikationsendgerät übertragen (paketvermittelte Datenübertragung). Mobile Kommunikationsendgeräte (z. B. Mobiltelefone, persönliche digitale Assistenten oder tragbare Computer mit Mobilfunkschnittstelle) können bei der Dienstnutzung naturgemäß an verschiedenen Standorten und damit in verschiedenen Mobilfunknetzen betrieben werden.

Aus der Patentschrift US 6,490,450 B1 ist ein Verfahren bekannt, bei dem Daten (insbesondere eine Serving Mobile Switching Center ID) eines 'roamenden' Mobilfunkteilnehmers in einer Netzwerk-Plattform zwischengespeichert werden. Wenn ein Service Control Point anhand einer IAM-Nachricht festgestellt hat, dass der Mobilfunkteilnehmer in einem besuchten Netzwerk ,roamt', dann fragt der Service Control Point von der Netzwerk-Plattform die zwischengespeicherte Serving Mobile Switching Center ID ab.

Aus der europäischen Patentanmeldung EP 1 223 737 A1 ist bekannt, in einem GPRS-Kommunikationsnetz einen Prepaid-Dienst zu nutzen. Dabei wird ein PDP-Kontext zu einem Gateway GPRS Support Node aufgebaut.

Der Erfindung liegt die Aufgabe zugrunde, ein Verfahren zum Ermitteln eines Abrechnungstarifs zum Abrechnen einer Datenübertragung anzugeben, bei dem der Standort des mobilen Kommunikationsendgerätes berücksichtigt wird.

Diese Aufgabe wird erfindungsgemäß gelöst durch ein Verfahren zum Ermitteln eines Abrechnungstarifs zum Abrechnen einer Datenübertragung, wobei sich ein an der Datenübertragung beteiligtes mobiles Kommunikationsendgerät mit Zugriffsrechten für ein Daten-Mobilfunknetz in einem Besucher-Mobilfunknetz befindet, wobei bei dem Verfahren bei einem Aufbau eines zur Übertragung der Daten dienenden Datentunnels von dem Kommunikationsendgerät zu einem Netzübergangsknoten des Daten-Mobilfunknetzes eine das Kommunikationsendgerät betreffende Ortsinformation von einer dem Kommunikationsendgerät temporär zugeordneten Vermittlungsstelle des Besucher-Mobilfunknetzes zu dem Netzübergangsknoten des Daten-Mobilfunknetzes übertragen wird, von dem Netzübergangsknoten die Ortsinformation zu einem Abrechnungssystem übertragen wird, von dem Abrechnungssystem anhand der Ortsinformation festgestellt wird, dass sich das Kommunikationsendgerät in dem Besucher-Mobilfunknetz befindet, und von dem Abrechnungssystem ein dem Besucher-Mobilfunknetz zugeordneter Abrechnungstarif ermittelt wird. Hierbei ist insbesondere vorteilhaft, dass die Ortsinformation bei dem Aufbau des Datentunnels zu dem Netzübergangsknoten und danach zu dem Abrechnungssystem übertragen wird. Dadurch kann von dem Abrechnungssystem der für das Kommunikationsendgerät aufgrund dessen aktuellen Aufenthaltsortes anzuwendende Abrechnungstarif ermittelt werden. Sobald über den Datentunnel Daten übertragen werden, kann diese Datenübertragung unter Zuhilfenahme des Abrechnungstarifs dem Nutzer der Datenübertragung in Rechnung gestellt werden.

Das Verfahren kann so ausgeführt werden, dass verfahrenseinleitend von dem Besucher-Mobilfunknetz eine die Datenübertragung betreffende Anforderungsnachricht des Kommunikationsendgerätes empfangen wird, von dem Besucher-Mobilfunknetz aus einem zentralen Datenspeicher abgefragt wird, für welches Daten-Mobilfunknetz das Kommunikationsendgerät Zugriffsrechte besitzt, und daraufhin der Datentunnel zu dem Netzübergangsknoten dieses Daten-Mobilfunknetzes aufgebaut wird. Dabei wird vorteilhafterweise von dem Besucher-Mobilfunknetz ermittelt, für welches Daten-Mobilfunknetz das Kommunikationsendgerät Zugriffsrechte besitzt und über welches Daten-Mobilfunknetz demzufolge die Datenübertragung realisiert werden kann. Bei einem solchen Daten-Mobilfunknetz, für das das Kommunikationsendgerät Zugriffsrechte besitzt, kann es sich beispielsweise um das Heimatnetz des Kommunikationsendgerätes oder auch um ein Mobilfunknetz handeln, zwischen dessen Betreiber und einem Nutzer des Kommunikationsendgerätes eine entsprechende Vereinbarung geschlossen wurde.

Das Verfahren kann so ablaufen, dass von dem Netzübergangsknoten die Ortsinformation mittels einer Authentisierungsnachricht zu einem Authentisierungsserver des Daten-Mobilfunknetzes übertragen wird, und aufgrund der Authentisierungsnachricht die Ortsinformation zu einem Dienstrechnergateway übertragen wird. Dabei ist vorteilhaft, dass die Ortsinformation mittels einer Authentisierungsnachricht übertragen wird, welche in Daten-Mobilfunknetzen oftmals sowieso zwischen Netzübergangsknoten und Authentisierungsservern übertragen wird. Somit ist für die Übertragung der Ortsinformation keine zusätzliche Nachricht notwendig.

Bei dem erfindungsgemäßen Verfahren kann aufgrund der Authentisierungsnachricht die Ortsinformation zu einem Dienstrechnergateway übertragen werden, indem von dem Netzübergangsknoten die Authentisierungsnachricht über das Dienstrechnergateway zu dem Authentisierungsserver übertragen wird, bei der Übertragung von dem Dienstrechnergateway aus der Authentisierungsnachricht die Ortsinformation ausgelesen wird, und die Ortsinformation in dem Dienstrechnergateway gespeichert wird. Bei dieser Ausgestaltungsform des erfindungsgemäßen Verfahrens wird vorteilhafterweise der Authentisierungsserver nicht mit zusätzlichen Aufgaben zur Verarbeitung der Ortsinformation belastet, da das Dienstrechnergateway selbstständig die Ortsinformation aus der Authentisierungsnachricht ausliest und speichert.

Das erfindungsgemäße Verfahren kann so ablaufen, dass von dem Dienstrechnergateway die Datenübertragung überwacht wird, und ermittelte Überwachungsinformationen und die Ortsinformation von dem Dienstrechnergateway zu dem Abrechnungssystem übertragen werden. Dabei wird das Abrechnungssystem von dem Dienstrechnergateway mit den für die Abrechnung verwendbaren Informationen versorgt.

Bei dem erfindungsgemäßen Verfahren kann durch den Netzübergangsknoten ein Benutzername und/oder ein Passwort von dem Kommunikationsendgerät empfangen werden, und daraufhin die Authentisierungsnachricht zu dem Authentisierungsserver übertragen werden, wobei die Authentisierungsnachricht den Benutzernamen und/oder das Passwort enthält. Dabei kann vorteilhafterweise die in dem Daten-Mobilfunknetz sowieso notwendige Authentisierung der Datenübertragung mit der Übertragung der Ortsinformation verbunden werden.

Das erfindungsgemäße Verfahren kann aber auch so ablaufen, dass durch den Netzübergangsknoten ein lediglich als Platzhalter dienender Benutzername und/oder ein lediglich als Platzhalter dienendes Passwort von dem Kommunikationsendgerät empfangen wird. Diese Ausgestaltung des erfindungsgemäßen Verfahrens ermöglicht eine Übertragung der Ortsinformation mittels der Authentisierungsnachricht zu dem Dienstrechnergateway auch dann, wenn keine Authentisierung der Datenübertragung notwendig ist. Das Verwenden eines lediglich als Platzhalter (Dummy) dienenden Benutzernamens und/oder Passwortes ermöglicht es dem Netzübergangsknoten, eine formal vollständige Authentisierungsnachricht zu erstellen und zu übertragen.

Bei dem erfindungsgemäßen Verfahren kann als Daten-Mobilfunknetz das Heimat-Mobilfunknetz des Kommunikationsendgerätes verwendet werden.

Bei dem erfindungsgemäßen Verfahren kann von dem Abrechnungssystem die Ortsinformation verglichen werden mit gespeicherten Ortsinformationen, welche verschiedenen Besucher-Mobilfunknetzen zugehörig sind, und bei einer Übereinstimmung der Ortsinformation mit einer der gespeicherten Ortsinformationen kann von dem Abrechnungssystem festgestellt werden, dass sich das Kommunikationsendgerät in dem zugehörigen Besucher-Mobilfunknetz befindet. Hierbei ist durch einen einfachen Vergleich der Ortsinformation mit den gespeicherten Ortsinformationen eine Ermittlung genau des Besucher-Mobilfunknetzes möglich, in dem sich das mobile Kommunikationsendgerät aktuell befindet.

Bei dem Verfahren kann erfindungsgemäß von der dem Kommunikationsendgerät temporär zugeordneten Vermittlungsstelle des Besucher-Mobilfunknetzes als Ortsinformation eine die Vermittlungsstelle eindeutig identifizierende Vermittlungsstellenadresse zu dem Netzübergangsknoten übertragen werden.

Hierbei wird vorteilhafterweise eine im Besucher-Mobilfunknetz sowieso vorhandene Information (Vermittlungsstellenadresse) als Ortsinformation genutzt, wodurch sich ein besonders einfach zu realisierendes Verfahren ergibt.

Das erfindungsgemäße Verfahren kann so ablaufen, dass von der dem Kommunikationsendgerät temporär zugeordneten Vermittlungsstelle zusätzlich eine Kenngröße der Datenübertragung zu dem Abrechnungssystem übertragen wird und diese Kenngröße bei der Ermittlung des Abrechnungstarifs herangezogen wird. Dies ermöglicht es vorteilhafterweise, verschiedene Abrechnungstarife zu nutzen, welche über quantitative Merkmale (Kenngrößen) der Datenübertragung zugeordnet werden.

Als Kenngröße der Datenübertragung kann eine Bandbreitenkenngröße der Luftschnittstelle des Kommunikationsendgerätes zu dem Abrechnungssystem übertragen werden.

Zur weiteren Erläuterung der Erfindung ist in
Figur 1 ein Ausführungsbeispiel von an einer Datenübertragung beteiligten Telekommunikationsnetzen zusammen mit Verfahrensschritten des erfindungsgemäßen Verfahrens und in
Figur 2 ein Ausführungsbeispiel von Nachrichtenübertragungen zwischen einem Netzübergangsknoten und einem Authentisierungsserver dargestellt.

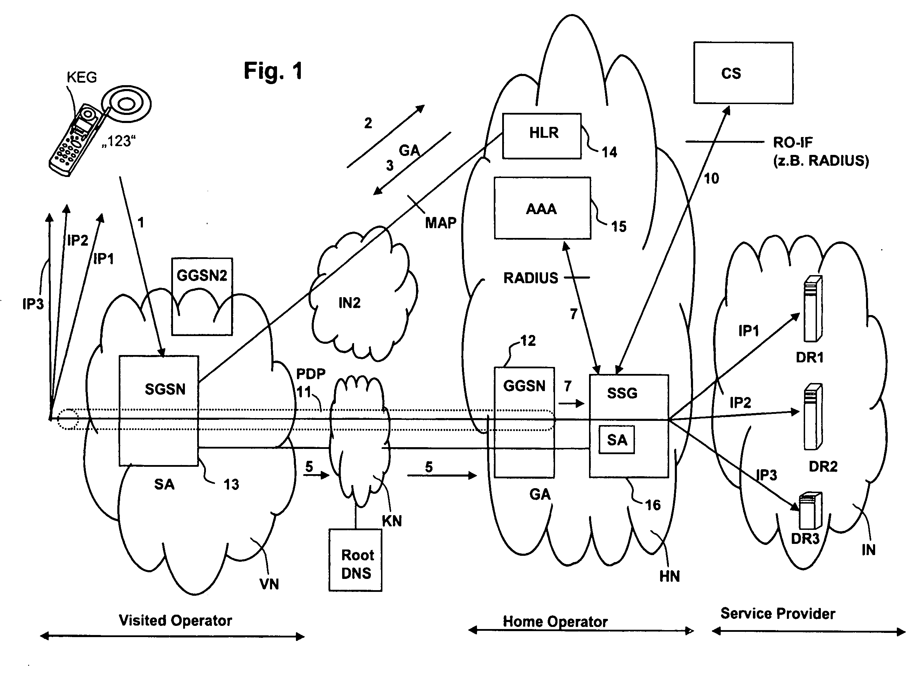

In Figur 1 ist ein mobiles Kommunikationsendgerät KEG in Form eines Mobiltelefons mit der Mobilfunkrufnummer "123" dargestellt, das sich aktuell im Funkbereich eines Besucher-Mobilfunknetzes VN befindet und mit diesem verbunden ist. Das Besucher-Mobilfunknetz VN unterliegt der Kontrolle eines Besuchernetz-Operators ("visited operator"). Mittels des Kommunikationsendgerätes KEG soll ein Dienst eines Dienstrechners DR2 in Anspruch genommen werden, wobei der Dienstrechner DR2 im Internet IN angeordnet ist. Der Dienstrechner DR2 unterliegt der Kontrolle eines Dienste-Anbieters ("service provider"). Der Zugriff des Kommunikationsendgerätes KEG auf den Dienstrechner DR2 des Internets IN erfolgt über das Besucher-Mobilfunknetz VN, über ein weiteres Telekommunikationsnetz KN und über ein Daten-Mobilfunknetz HN. Bei dem Daten-Mobilfunknetz HN handelt es sich allgemein um ein Mobilfunknetz, für welches das Kommunikationsendgerät KEG Zugriffsrechte besitzt und über welches demzufolge die Dienstnutzung bzw. der Zugriff auf Daten des Dienstrechners DR2 erfolgt.

Bei dieser Dienstnutzung werden zwischen dem Kommunikationsendgerät KEG und dem Dienstrechner DR2 Datenpakete IP2 ausgetauscht. Durch die Übertragung solcher nach dem Internet-Protokoll (IP) aufgebauten IP-Datenpakete wird eine bidirektionale Datenübertragung zwischen dem Kommunikationsendgerät KEG und dem Daten-Mobilfunknetz HN bzw. dem Dienstrechner DR2 realisiert.

Von dem Kommunikationsendgerät KEG kann auch gleichzeitig ein weiterer Dienst eines weiteren Dienstrechners DR1 und/oder ein dritter Dienst eines dritten Dienstrechners DR3 genutzt werden. Dazu können zwischen dem Kommunikationsendgerät KEG und dem weiteren Dienstrechner DR1 bidirektional Datenpakete IP1 ausgetauscht werden. Ebenso können zwischen dem Kommunikationsendgerät KEG und dem dritten Dienstrechner DR3 bidirektional Datenpakete IP3 ausgetauscht werden.

Dienste, auf die das mobile Kommunikationsendgerät mittels Datenübertragungen von Datenpaketen zugreift, werden auch als "IP-Services" bezeichnet. Solche Dienste werden dem Nutzer des Kommunikationsendgerätes KEG von seinem Heimat-Mobilfunknetznetz HN (mobile network operator core network) zur Verfügung gestellt. Dies geschieht im Ausführungsbeispiel dadurch, dass das Heimatnetz HN einen Zugang zu dem Dienstrechner DR2 des Internets vermittelt. Im Ausführungsbeispiel unterliegt das Daten-Mobilfunknetz HN als Heimat-Mobilfunknetz der Kontrolle eines Heimatnetz-Operators ("home operator"). Bei einem anderen Ausführungsbeispiel kann der Dienstrechner DR2 natürlich auch innerhalb des Heimatnetzes HN angeordnet sein.

In einem anderen Ausführungsbeispiel kann auch der Fall eintreten, dass zwischen einem Benutzer des Kommunikationsendgerätes KEG und einem Netzbetreiber eines dritten Mobilfunknetzes (welches sich von dem Heimat-Mobilfunknetz des Kommunikationsendgerätes KEG unterscheidet) ein Vertrag abgeschlossen wird, auf dessen Grundlage das Kommunikationsendgerät KEG auf dieses dritte Mobilfunknetz zugreifen kann, um über dieses dritte Mobilfunknetz Dienste zu nutzen. In diesem Fall werden in dem Kommunikationsendgerät KEG sogenannte "APN-Einstellungen" (APN = Access Point Name) so verändert, dass das Kommunikationsendgerät KEG auf einen Netzübergangsknoten dieses dritten Mobilfunknetzes zugreifen kann. In diesem Fall verhält sich bezüglich der Dienstnutzung dieses dritte Mobilfunknetz ähnlich wie das Heimatnetz des Kommunikationsendgerätes; das dritte Mobilfunknetz ermöglicht nämlich dem Kommunikationsendgerät KEG die Datenübertragung mit dem jeweiligen Dienstrechner.

Das Mobilfunknetz, auf das der roamende Mobilfunkteilnehmer zugreifen kann und für das er Zugriffsrechte besitzt, wird im Rahmen dieser Beschreibung als Daten-Mobilfunknetz bezeichnet. Bei diesem Daten-Mobilfunknetz kann es sich also sowohl um das Heimat-Mobilfunknetz des Kommunikationsendgerätes handeln als auch um ein drittes Mobilfunknetz, auf das das Kommunikationsendgerät zum Zwecke der Dienstnutzung zugreifen kann.

Mit dem Daten-Mobilfunknetz HN verbunden ist ein Abrechnungssystem CS, mit dem die Datenübertragung abgerechnet wird. Dadurch kann diese Datenübertragung einem Nutzer des Kommunikationsendgerätes KEG in Rechnung gestellt werden. Zu diesem Zweck werden bei dem Abrechnungssystem CS verschiedene Abrechnungstarife vorrätig gehalten, welche entsprechend der Art der jeweiligen Datenübertragung anzuwenden sind. In dem Abrechnungssystem CS ist z.B. ein Abrechnungstarif gespeichert, welcher dann anzuwenden ist, wenn sich das mobile Kommunikationsendgerät KEG im Einflussbereich des Besucher-Mobilfunknetzes VN befindet (d.h. in diesem "roamt"). Für weitere in der Figur nicht dargestellte Besucher-Mobilfunknetze (in deren Einflussbereich das mobile Kommunikationsendgerät ebenfalls gelangen könnte und von wo aus das Kommunikationsendgerät ebenfalls Datenübertragungen zu dem Daten-Mobilfunknetz aufbauen könnte) sind in dem Abrechnungssystem CS ebenfalls zugeordnete Abrechnungstarife gespeichert. Solche Abrechnungstarife enthalten beispielsweise auf die jeweilige Datenübertragung anzuwendende Preisdaten (z. B. eine Minute Datenübertragung kostet 0,30 Euro, 10 KByte übertragene Datenmenge kostet 1 Euro, ein komplett mittels Datenpaketen übertragener Datensatz kostet 3 Euro).

Im Folgenden wird erläutert, wie in dem Abrechnungssystem CS der aktuell anzuwendende Abrechnungstarif ermittelt wird. Wenn zum Zweck der Dienstnutzung von dem mobilen Kommunikationsendgerät KEG aus auf den Dienstrechner DR2 zugegriffen und eine entsprechende Datenübertragung zwischen dem Kommunikationsendgerät und dem Dienstrechner DR2 realisiert werden soll, dann sendet das Kommunikationsendgerät KEG eine die Datenübertragung betreffende Anforderungsnachricht an das Besucher-Mobilfunknetz VN (Pfeil 1). Diese Anforderungsnachricht gelangt zu einer Vermittlungsstelle SGSN (SGSN = Serving GPRS Support Node) des Besucher-Mobilfunknetzes VN. Die Vermittlungsstelle SGSN fragt daraufhin aus einem zentralen Datenspeicher in Form eines Heimatregisters HLR ab, für welches Daten-Mobilfunknetz das Kommunikationsendgerät KEG Zugriffsrechte besitzt (Pfeil 2). Diese Abfrage erfolgt im Ausführungsbeispiel über ein weiteres Internet IN2 unter Nutzung von MAP-Nachrichten. In dem Heimatregister HLR sind für jeden Teilnehmer Informationen bezüglich seiner Zugriffsrechte in Form eines Datensatzes "GPRS Subscription Data" gespeichert (in GPRS- oder UMTS-Mobilfunknetzen kann als zentraler Datenspeicher auch ein Speicherknoten HSS verwendet werden). Das Heimatregister HLR überträgt mittels der MAP-Nachricht "Insert Subscriber" eine Gateway-Adresse GA eines Netzübergangsknotens GGSN des Daten-Mobilfunknetzes HN an die Vermittlungsstelle SGSN (Pfeil 3). Daraufhin wird ein Datentunnel PDP (PDP = Packet Data Protocol) in Form eines sog. PDP-Kontexts zur Realisierung der Datenübertragung zwischen dem Kommunikationsendgerät und dem Netzübergangsknoten GGSN des Daten-Mobilfunknetzes aufgebaut. Während des Aufbaus des Datentunnels PDP sendet das mobile Kommunikationsendgerät einen Benutzernamen und/oder ein Passwort zu dem Netzübergangsknoten GGSN. Bei diesem Benutzernamen und/oder Passwort kann es sich um einen Benutzernamen und/oder ein Passwort handeln, welches zur Authentisierung der Datenübertragung vorgesehen ist. Alternativ kann es sich aber auch um einen lediglich als Platzhalter (Dummy) dienenden Benutzernamen und/oder Passwort handeln, deren Inhalt beliebig ist und keinerlei Bedeutung hat. In diesem Fall dient ein derart ausgestalteter Benutzername und/oder Passwort vorteilhafterweise dazu, dem Netzübergangsknoten GGSN auch dann die Möglichkeit zu geben, eine Authentisierungsnachricht zu erstellen, wenn eine Authentisierung unter Sicherheitsaspekten betrachtet überhaupt nicht notwendig ist.

Bei dem Aufbau des Datentunnels PDP wird ebenfalls eine das Kommunikationsendgerät betreffende Ortsinformation in Form einer die Vermittlungsstelle SGSN eindeutig identifizierenden Vermittlungsstellenadresse SA zu dem Netzübergangsknoten GGSN übertragen. Diese Vermittlungsstellenadresse SA stellt eine Ortsinformation für das Kommunikationsendgerät KEG dar, weil sich das mobile Kommunikationsendgerät KEG aktuell in dem örtlichen Einflussbereich dieser Vermittlungsstelle SGSN befindet; die Vermittlungsstelle SGSN ist folglich die dem Kommunikationsendgerät temporär zugeordnete Vermittlungsstelle des Besucher-Mobilfunknetzes. Die Übertragung der Ortsinformation SA und des Benutzernamens und/oder des Passwortes sind durch die Pfeile 5 symbolisiert. Diese Daten werden im Ausführungsbeispiel über das weitere Telekommunikationsnetz KN zu dem Netzübergangsknoten GGSN übertragen. Bei dem weiteren Telekommunikationsnetz KN handelt es sich im Ausführungsbeispiel um einen sog. Inter-PLMN-Backbone, an den ein an sich bekannter Adressübersetzer in Form eines "Root Domain Name Servers" (Root DNS) angeschlossen ist. Dieser Domain Name Server übernimmt in bekannter Weise eine Adressübersetzung der Vermittlungsstellenadresse SA zwischen ihrer numerischen und ihrer symbolischen Form. Die Vermittlungsstellenadresse SA weist im Ausführungsbeispiel eine Form einer IP-Adresse auf. Als Ortsinformationen können aber erfindungsgemäß auch andere Informationen zu dem Netzübergangsknoten des Daten-Mobilfunknetzes übertragen werden, z.B. ein Ländercode des Staates, in dem sich das Kommunikationsendgerät KEG aktuell befindet oder eine Kennung (Cell-ID) der Funkzelle des Besucher-Mobilfunknetzes VN, in deren Funkabdeckungsbereich sich das Kommunikationsendgerät KEG aktuell befindet.

Nachdem von dem Netzübergangsknoten GGSN der Benutzername, das Passwort und die Ortsinformation empfangen wurde, wird von dem Netzübergangsknoten GGSN eine Authentisierungsnachricht erstellt, welche den Benutzernamen, das Passwort und die Ortsinformation enthält. Diese Authentisierungsnachricht wird von dem Netzübergangsknoten GGSN über ein Dienstrechnergateway SSG zu einem Authentisierungsserver AAA übertragen. Als eine derartige Authentisierungsnachricht dient eine nach dem RADIUS-Protokoll aufgebaute Nachricht "Access Request" (Pfeil 7). Das Dienstrechnergateway SSG ist derjenige Netzknoten des Daten-Mobilfunknetzes HN, welcher eine Verbindung zu dem den jeweiligen Dienst anbietenden Dienstrechner (im Ausführungsbeispiel zu dem Dienstrechner DR2 des Internets) aufbauen kann.

Das Dienstrechnergateway SSG liest aus der Authentisierungsnachricht 7 die Ortsinformation SA aus und speichert diese für die Dauer der Datenübertragung zwischen. (In einer alternativen Ausführungsform wird die Ortsinformation SA mit der Authentisierungsnachricht zu dem Authentisierungsserver AAA übertragen, von diesem Authentisierungsserver AAA aus der Authentisierungsnachricht ausgelesen und daraufhin von dem Authentisierungsserver AAA zu dem Dienstrechnergateway SSG übermittelt. Daraufhin wird die Ortsinformation SA von dem Dienstrechnergateway SSG zwischengespeichert.)

Das Dienstrechnergateway SSG überwacht nun die Datenübertragung zwischen dem Kommunikationsendgerät KEG und dem Dienstrechner DR2; beispielsweise ermittelt das Dienstrechnergateway SSG die Anzahl und/oder die Datenmenge der Datenpakete IP2, welche zwischen dem Kommunikationsendgerät KEG und dem Dienstrecher DR2 ausgetauscht werden. Das Dienstrechnergateway SSG sendet die so ermittelten Informationen als Überwachungsinformationen gemeinsam mit der gespeicherten Ortsinformation SA zu dem Abrechnungssystem CS. Derartige Überwachungsinformationen können beispielsweise mittels nach dem RADIUS-Protokoll aufgebauten Abrechnungsnachrichten "Accounting Start" und "Accounting Stop" übertragen werden (Pfeil 10). Diese Nachrichten werden zu Beginn bzw. zum Ende der abzurechnenden Datenübertragung von dem Dienstrechnergateway SSG zu dem Abrechnungssystem CS übertragen. Dabei findet die Datenübertragung zwischen dem Dienstrechnergateway SSG und dem Abrechnungssystem CS über das an sich bekannte "RO-Interface" RO-IF statt; auf diese Weise wird eine Abrechnung der Datenübertragungen der aktuellen "session" (Datenübertragung) vorbereitet. Von dem Abrechnungssystem CS wird nun anhand der Ortsinformation SA festgestellt, dass sich das Kommunikationsendgerät KEG in dem Besucher-Mobilfunknetz VN befindet. Dazu wird von dem Abrechnungssystem die Ortsinformation SA verglichen mit gespeicherten Ortsinformationen, welche verschiedenen Besucher-Mobilfunknetzen zugehörig sind. Im Ausführungsbeispiel ist in dem Abrechnungssystem CS abgespeichert, dass die Vermittlungsstellenadresse SA dem Besucher-Mobilfunknetz VN zugehörig ist. Aufgrund dieser abgespeicherten Ortsinformation erkennt das Abrechnungssystem CS, dass sich das Kommunikationsendgerät KEG im Einflussbereich des Besucher-Mobilfunknetzes VN befindet. Daraufhin wird von dem Abrechnungssystem CS der dem Besucher-Mobilfunknetz VN zugeordnete Abrechnungstarif ermittelt und für die darauffolgende Abrechnung der Datenübertragung herangezogen. Dieser Abrechnungstarif kann beispielsweise höhere Abrechnungsgebühren aufweisen als ein Abrechnungstarif, der angewandt würde, wenn sich das Kommunikationsendgerät KEG in dem Funkabdeckungsbereich des Daten-Mobilfunknetzes HN befinden würde bzw. direkt mit diesem verbunden wäre (d. h. wenn das Kommunikationsendgerät KEG nicht "roamt", sondern sich beispielsweise im Einflussbereich seines Heimatnetzes befindet).

Bei jedem Senden einer Abrechnungsnachricht 10 fügt das Dienstrechnergateway SSG die Ortsinformation SA in die Abrechnungsnachricht ein, so dass das Abrechnungssystem CS ständig überprüfen kann, ob sich das Kommunikationsendgerät KEG noch in dem Besucher-Mobilfunknetz VN befindet.

Alternativ kann von der dem Kommunikationsendgerät temporär zugeordneten Vermittlungsstelle SGSN neben der Vermittlungsstellenadresse SA beim Aufbau des Datentunnels PDP zusätzlich eine Kenngröße der Datenübertragung zu dem Daten-Mobilfunknetz HN und zu dem Abrechnungssystem CS übertragen werden. Als ein solche Kenngröße kann beispielsweise eine Information über die Bandbreite der Luftschnittstelle des Mobiltelefons KEG übertragen werden. Dies ist insbesondere bei UMTS-Mobilfunknetzen vorteilhaft, da in diesen Netzen abhängig von der Richtung der übertragenen Daten mit verschiedenen Datenübertragungsraten (Bandbreiten) gearbeitet wird. Auch diese zusätzliche Kenngröße der Datenübertragung kann von dem Abrechnungssystem CS bei der Ermittlung des Abrechnungstarifs herangezogen werden.

In einer weiteren alternativen Ausgestaltungsform des Verfahrens kann das Dienstrechnergateway SSG sogenannte "charging tickets" erzeugen, die dann zu einem Abrechnungssystem in Form eines Gebührennacherhebungssystems (Postpaid-System) übertragen werden. Bei der Erzeugung dieser Tickets verwendet das Dienstrechnergateway SSG einen Abrechnungstarif. Zur Ermittlung des Abrechnungstarifs kann das Dienstrechnergateway SSG die Ortsinformation verwenden, die es von dem Netzübergangsknoten GGSN erhalten hat.

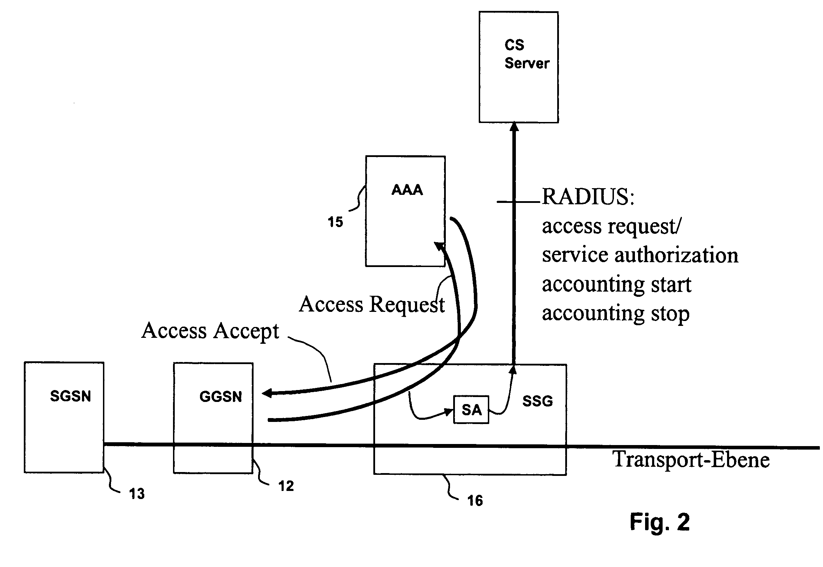

In Figur 2 ist anschaulich dargestellt, wie von dem Netzübergangsknoten GGSN mittels der Authentisierungsnachricht "Access Request" die Vermittlungsstellenadresse SA zu dem Authentisierungsserver AAA übertragen wird. Das Dienstrechnergateway SSG liest diese Vermittlungsstellenadresse SA aus der Authentisierungsnachricht aus und speichert diese Vermittlungsstellenadresse SA zwischen, um sie später gemeinsam mit den Überwachungsinformationen im Rahmen der nach RADIUS-Vorgaben ausgeführten Aktionen "Access Request" und "Service Authorization" an das Abrechnungssystem CS zu übermitteln. Der Authentisierungsserver AAA antwortet auf die Authentisierungsnachricht "Access Request" mit der Nachricht "Access Accept".

Mit dem beschriebenen Verfahren kann ein Abrechnungstarif zum Abrechnen einer IP-Paket-orientierten bzw. paketvermittelten Datenübertragung ermittelt werden, wobei berücksichtigt wird, ob sich das Mobilkommunikationsendgerät in einem Besucher-Mobilfunknetz befindet (roamt).

Bei diesem Verfahren werden vorteilhafterweise insbesondere keinerlei Funktionalitäten des CAMEL3-Standards verwendet. Dies ist ein beträchtlicher Vorteil, da viele Netzwerkbetreiber derzeit die Funktionalitäten von CAMEL3 aus Kosten- und Aufwandsgründen nicht in ihren Mobilfunknetze anbieten bzw. nutzen. Mit der beschriebenen Lösung kann auch bei Mobilfunknetzen, die keine Unterstützung der Funktionalitäten des CAMEL-Standards aufweisen, erkannt werden, dass sich ein mobiles Kommunikationsendgerät bei der Nutzung von paketbasierten Diensten in einem Besucher-Mobilfunknetz befindet; es kann ein diesem Besucher-Mobilfunknetz zugeordneter Abrechnungstarif für die Abrechnung der Dienstnutzung bzw. der zugehörigen Datenübertragung ermittelt werden. Dieses Ermitteln des Abrechnungstarifs kann in Echtzeit ausgeführt werden, so dass die folgende Abrechnung beispielsweise auch über vorausbezahlte Guthaben (Prepaid-Verfahren) erfolgen kann. Das beschriebene Verfahren kann dabei vorteilhafterweise mittels der Übertragung von nach RADIUS-Vorgaben aufgebauten Nachrichten ausgeführt werden.

### Verwendete Abkürzungen:

- CAMEL: Customised Applications for Mobile network Enhanced Logic
- GGSN: Gateway GPRS Support Node
- GPRS: General Packet Radio Service
- HLR: Home Location Register
- HSS: Home Subscriber Server
- MAP: Mobile Application Part
- PLMN: Public Land Mobile Network
- PDP: Packet Data Protocol, z.B. IP-Protocol
- SGSN: Serving GPRS Support Node
- SSG: Service Selection Gateway
- UMTS: Universal Mobile Telecommunication System

## Patentansprüche

1. Verfahren zum Ermitteln eines Abrechnungstarifs zum Abrechnen einer Datenübertragung (IP2), wobei sich ein an der Datenübertragung beteiligtes mobiles Kommunikationsendgerät (KEG) mit Zugriffsrechten für ein Daten-Mobilfunknetz (HN) in einem Besucher-Mobilfunknetz (VN) befindet, wobei bei dem Verfahren
- eine das Kommunikationsendgerät (KEG) betreffende Ortsinformation (SA) von einer dem Kommunikationsendgerät temporär zugeordneten Vermittlungsstelle (13) des Besucher-Mobilfunknetzes (VN) zu einem Netzübergangsknoten (12) des Daten-Mobilfunknetzes (HN) übertragen wird,
- von dem Netzübergangsknoten (12) die Ortsinformation (SA) zu einem Abrechnungssystem (CS) übertragen wird, und
- von dem Abrechnungssystem (CS) ein dem Besucher-Mobilfunknetz (VN) zugeordneter Abrechnungstarif ermittelt wird,
**dadurch gekennzeichnet, dass**
- bei einem Aufbau eines zur Übertragung der Daten dienenden Datentunnels (11) von dem Kommunikationsendgerät (KEG) zu dem Netzübergangsknoten (12) des Daten-Mobilfunknetzes (HN) die Ortsinformation (SA) zu dem Netzübergangsknoten (12) des Daten-Mobilfunknetzes (HN) übertragen wird, und
- von dem Abrechnungssystem (CS) anhand der Ortsinformation (SA) festgestellt wird, dass sich das Kommunikationsendgerät (KEG) in dem Besucher-Mobilfunknetz (VN) befindet.

2. Verfahren nach Anspruch 1,
**dadurch gekennzeichnet, dass**
- verfahrenseinleitend von dem Besucher-Mobilfunknetz (VN) eine die Datenübertragung (IP2) betreffende Anforderungsnachricht (1) des Kommunikationsendgerätes (KEG) empfangen wird,
- von dem Besucher-Mobilfunknetz (VN) aus einem zentralen Datenspeicher (14) abgefragt wird, für welches Daten-Mobilfunknetz das Kommunikationsendgerät Zugriffsrechte besitzt, und
- daraufhin der Datentunnel (11) zu dem Netzübergangsknoten (12) dieses Daten-Mobilfunknetzes (HN) aufgebaut wird.

3. Verfahren nach Anspruch 1 oder 2,
**dadurch gekennzeichnet, dass**
- von dem Netzübergangsknoten (12) die Ortsinformation (SA) mittels einer Authentisierungsnachricht (7) zu einem Authentisierungsserver (15) des Daten-Mobilfunknetzes (HN) übertragen wird, und
- aufgrund der Authentisierungsnachricht (7) die Ortsinformation (SA) zu einem Dienstrechnergateway (16) übertragen wird.

4. Verfahren nach Anspruch 3,
**dadurch gekennzeichnet, dass**
- von dem Netzübergangsknoten (12) die Authentisierungsnachricht (7) über das Dienstrechnergateway (16) zu dem Authentisierungsserver (15) übertragen wird,
- bei der Übertragung von dem Dienstrechnergateway (16) aus der Authentisierungsnachricht (7) die Ortsinformation (SA) ausgelesen wird, und
- die Ortsinformation (SA) in dem Dienstrechnergateway (16) gespeichert wird.

5. Verfahren nach Anspruch 3 oder 4,
**dadurch gekennzeichnet, dass**
- von dem Dienstrechnergateway (16) die Datenübertragung (IP2) überwacht wird, und
- ermittelte Überwachungsinformationen und die Ortsinformation (SA) von dem Dienstrechnergateway (16) zu dem Abrechnungssystem (CS) übertragen (10) werden.

6. Verfahren nach einem der Ansprüche 3 bis 5,
**dadurch gekennzeichnet, dass**
- durch den Netzübergangsknoten (12) ein Benutzername und/oder ein Passwort von dem Kommunikationsendgerät (KEG) empfangen wird, und
- daraufhin die Authentisierungsnachricht (7) zu dem Authentisierungsserver (15) übertragen wird, wobei die Authentisierungsnachricht den Benutzernamen und/oder das Passwort enthält.

7. Verfahren nach Anspruch 6,
**dadurch gekennzeichnet, dass**
- durch den Netzübergangsknoten (12) ein lediglich als Platzhalter dienender Benutzername und/oder ein lediglich als Platzhalter dienendes Passwort von dem Kommunikationsendgerät empfangen wird.

8. Verfahren nach einem der vorhergehenden Ansprüche,
**dadurch gekennzeichnet, dass**
- als Daten-Mobilfunknetz das Heimat-Mobilfunknetz (HN) des Kommunikationsendgerätes (KEG) verwendet wird.

9. Verfahren nach einem der vorhergehenden Ansprüche,
**dadurch gekennzeichnet, dass**
- von dem Abrechnungssystem (CS) die Ortsinformation (SA) verglichen wird mit gespeicherten Ortsinformationen, welche verschiedenen Besucher-Mobilfunknetzen zugehörig sind, und
- bei einer Übereinstimmung der Ortsinformation (SA) mit einer der gespeicherten Ortsinformationen von dem Abrechnungssystem (CS) festgestellt wird, dass sich das Kommunikationsendgerät (KEG) in dem zugehörigen Besucher-Mobilfunknetz (VN) befindet.

10. Verfahren nach einem der vorhergehenden Ansprüche,
**dadurch gekennzeichnet, dass**
- von der Vermittlungsstelle (13) als Ortsinformation eine die Vermittlungsstelle (13) eindeutig identifizierende Vermittlungsstellenadresse (SA) zu dem Netzübergangsknoten (12) übertragen wird.

11. Verfahren nach einem der vorhergehenden Ansprüche,
**dadurch gekennzeichnet, dass**
- von der Vermittlungsstelle (13) zusätzlich eine Kenngröße der Datenübertragung (IP2) zu dem Abrechnungssystem (CS) übertragen wird und diese Kenngröße bei der Ermittlung des Abrechnungstarifs herangezogen wird.

12. Verfahren nach Anspruch 11,
**dadurch gekennzeichnet, dass**
- als Kenngröße der Datenübertragung eine Bandbreitenkenngröße der Luftschnittstelle des Kommunikationsendgerätes (KEG) zu dem Abrechnungssystem (CS) übertragen wird.

## Claims

1. Method for calculating a tariff for the billing of a data transmission (IP2), with a mobile communication terminal (KEG) participating in the data transmission with access rights for a data mobile radio network (HN) being located in a visited mobile radio network (VN), where
- location information (SA) relating to the communication terminal (KEG) is transmitted from a switching centre (13) belonging to the visited mobile radio network (VN) which is temporarily assigned to said communication terminal, to a network transition node (12),
- the location information (SA) is transmitted from the
- network transition node (12) to a billing system (CS) and
- a billing tariff assigned to the visited mobile radio network (VN) is determined by the billing system (CS),
**characterised in that**
- in setting up a data tunnel (11) from the communication terminal (KEG) to the network transition node (12) of the data mobile radio network (HN), said data tunnel serving to transmit the data, the location information (SA) is transmitted to the network transition node (12) of the data mobile radio network (HN), and
- the billing system (CS) establishes, on the basis of the location information (SA), that the communication terminal (KEG) is located within the visited mobile radio network (VN).

2. Method according to claim 1,
**characterised in that**
- introductory to the method, a request message (1) of the communication terminal (KEG) relating to the data transmission (IP2) is received from the visited mobile radio network (VN)
- a central data memory (14) is interrogated from the visited mobile radio network (VN), to ascertain for which data mobile radio network the communication terminal possesses access rights, and
- the data tunnel (11) is thereupon set up to the network transition node (12) of this mobile network operator core network (HN).

3. Method according to claim 1 or 2,
**characterised in that**
- the location information (SA) is transmitted to an authentication server (15) of the data mobile radio network (HN) from the network transition node (12) by means of an authentication message (7) and
- on the basis of the authentication message (7), the location information (SA) is transmitted to a service computer gateway (16).

4. Method according to claim 3,
**characterised in that**
- the authentication message (7) is transmitted from the network transition node (12) to the authentication server (15) via the service computer gateway (16),
- during transmission from the service computer gateway (16), the location information (SA) is read from the authentication message (7), and
- the location information (SA) is stored in the service computer gateway (16).

5. Method according to claim 3 or 4,
**characterised in that**
- the data transmission (IP2) is monitored by the service computer gateway (16), and
- monitoring information and the location information (SA) is transmitted (10) from the service computer gateway (16) to the billing system (CS).

6. Method according to claims 3 to 5,
**characterised in that**
- a user name and/or a password is received from the communication terminal (KEG) by means of the network transition node (12) and
- the authentication message (7) is thereupon transmitted to the authentication server (15), with the authentication message containing the user name and/or the password.

7. Method according to claim 6,
**characterised in that**
- a user name serving solely as a dummy and/or a password serving solely as a dummy is received from the communication terminal by means of the network transition node (12).

8. Method according to one of the preceding claims,
**characterised in that**
- the mobile network operator core network (HN) of the communication terminal (KEG) is used as the data mobile radio network.

9. Method according to one of the preceding claims,
**characterised in that**
- the location information (SA), which is associated with different visited mobile radio networks, is compared with the stored location information by the billing system (CS), and
- in the event that the location information (SA) complies with one of the items of stored location information, the billing system (CS) ascertains that the communication terminal (KEG) is located in the associated visited mobile radio network (VN).

10. Method according to one of the preceding claims,
**characterised in that**
- a switching centre address (SA) which uniquely identifies the switching centre (13) is transmitted from the switching centre (13) to the network transition node (12) as location information.

11. Method according to one of the preceding claims,
**characterised in that**
- a parameter of the data transmission (IP2) is additionally transmitted from the switching centre (13) to the billing centre (CS), and this parameter is used to determine the billing tariff.

12. Method according to claim 11, **characterised in that**
- a bandwidth parameter of the air interface of the communication terminal (KEG) is transmitted to the billing system (CS) as a parameter for the data transmission.

## Revendications

1. Procédé pour le calcul d'un tarif pour la facturation d'une transmission de données (IP2), un terminal de communication mobile (KEG) participant à la transmission de données, ayant des droits d'accès à un réseau de radiocommunication mobile de données (HN) se trouvant dans un réseau de radiocommunication mobile pour visiteurs (VN), dans lequel procédé
- une information de localisation (SA) concernant le terminal de communication (KEG) est transmise à un noeud de commutation de réseau (12) du réseau de radiocommunication mobile de données (HN) par un centre de commutation (13), affecté temporairement au terminal de communication, du réseau de radiocommunication mobile pour visiteurs (VN),
- l'information de localisation (SA) est transmise par le noeud de commutation de réseau (12) à un système de facturation (CS), et
- un tarif de facturation affecté au réseau de radiocommunication mobile pour visiteurs (VN) est calculé par le système de facturation (CS),
**caractérisé en ce que**
- lors de l'établissement d'un tunnel de données (11) servant à la transmission des données du terminal de communication (KEG) au noeud de commutation de réseau (12) du réseau de radiocommunication mobile de données (HN), l'information de localisation (SA) est transmise au noeud de commutation de réseau (12) du réseau de radiocommunication mobile de données (HN), et
- **en ce qu'**il est constaté par le système de facturation (CS) à l'aide de l'information de localisation (SA) que le terminal de communication (KEG) se trouve dans le réseau de radiocommunication mobile pour visiteurs (VN).

2. Procédé selon la revendication 1,
**caractérisé en ce qu'**
- un message de demande (1) du terminal de communication (KEG), concernant la transmission de données (IP2), est reçu par le réseau de radiocommunication mobile pour visiteurs (VN), ce message entraînant l'initialisation du procédé,
- **en ce qu'**il est demandé par le réseau de radiocommunication mobile pour visiteurs (VN) à partir d'une mémoire centrale de données (14), pour quel réseau de radiocommunication mobile de données le terminal de communication possède des droits d'accès, et
- **en ce que**, suite à cela, le tunnel de données (11) est établi vers le noeud de commutation de réseau (12) de ce réseau de radiocommunication mobile de données (HN).

3. Procédé selon la revendication 1 ou 2,
**caractérisé en ce que**
- l'information de localisation (SA) est transmise à un serveur d'authentification (15) du réseau de radiocommunication mobile de données (HN) par le noeud de commutation de réseau (12) au moyen d'un message d'authentification (7), et
- **en ce qu'**en raison du message d'authentification (7), l'information de localisation (SA) est transmise à une passerelle d'ordinateur de services (16).

4. Procédé selon la revendication 3,
**caractérisé en ce que**
- le message d'authentification (7) est transmis au serveur d'authentification (15) par le noeud de commutation de réseau (12) par l'intermédiaire de la passerelle d'ordinateur de services (16),
- **en ce que** l'information de localisation (SA) est lue à partir du message d'authentification (7) lors de la transmission par la passerelle d'ordinateur de services (16), et
- **en ce que** l'information de localisation (SA) est mémorisée dans la passerelle d'ordinateur de services (16).

5. Procédé selon la revendication 3 ou 4,
**caractérisé en ce que**
- la transmission de données (IP2) est contrôlée par la passerelle d'ordinateur de services (16), et
- **en ce que** les informations de contrôle déterminées et l'information de localisation (SA) sont transmises (10) au système de facturation (CS) par la passerelle d'ordinateur de services (16).

6. Procédé selon l'une quelconque des revendications 3 à 5,
**caractérisé en ce qu'**
- un nom d'utilisateur et/ou un mot de passe sont reçus par le terminal de communication (KEG) au moyen du noeud de commutation de réseau (12), et
- **en ce qu'** après cela, le message d' authentification (7) est transmis au serveur d'authentification (15), le message d'authentification contenant le nom d'utilisateur et/ou le mot de passe.

7. Procédé selon la revendication 6,
**caractérisé en ce qu'**
- un nom d'utilisateur servant uniquement de substitut et/ou un mot de passe servant uniquement de substitut sont reçus par le terminal de communication au moyen du noeud de commutation de réseau (12).

8. Procédé selon l'une quelconque des revendications précédentes,
**caractérisé en ce que**
- le réseau de radiocommunication mobile nominal (HN) du terminal de communication (KEG) est utilisé comme réseau de radiocommunication mobile de données.

9. Procédé selon l'une quelconque des revendications précédentes,
**caractérisé en ce que**
- l'information de localisation (SA) est comparée par le système de facturation (CS) à l'information de localisation mémorisée, laquelle appartient à différents réseaux de radiocommunication mobile pour visiteurs,
- **en ce qu'**en cas d'une concordance de l'information de localisation (SA) avec l'une des informations de localisation mémorisées, il est constaté par le système de facturation (CS) que le terminal de communication (KEG) se trouve dans le réseau de radiocommunication mobile correspondant pour visiteurs (VN).

10. Procédé selon l'une quelconque des revendications précédentes,
**caractérisé en ce qu'**
- une adresse (SA) de centre de commutation identifiant le centre de commutation (13) de manière univoque est transmise par le centre de commutation (13) au noeud de commutation de réseau (12) en tant qu'information de localisation.

11. Procédé selon l'une quelconque des revendications précédentes,
**caractérisé en ce qu'**
- une grandeur caractéristique de la transmission de données (IP2) est transmise en plus au système de facturation (CS) par le centre de commutation (13) et **en ce que** cette grandeur caractéristique est prise en compte lors du calcul du tarif de facturation.

12. Procédé selon la revendication 11,
**caractérisé en ce qu'**
- une grandeur caractéristique de largeur de bande de l'interface à air du terminal de communication (KEG) est transmise au système de facturation (CS) en tant que grandeur caractéristique de la transmission de données.
